# EUROPEAN PATENT SPECIFICATION

(11) **EP 2 784 218 B1**
(45) Date of publication and mention of the grant of the patent: **18.05.2016**
(21) Application number: 14158605.7
(22) Date of filing: 10.03.2014
(51) Int. Cl.: D21H 27/22, D21H 27/38, D21H 11/04, D21H 11/12, B32B 29/06, B44C 3/02

(54) **Granulation-free ecological plate high-pressure decorative surface material and manufacturing method thereof**
Körnungsfreies ökologisches Hochdruckplattenmaterial mit dekorativer Oberfläche, und Verfahren zur Herstellung davon
Matériau écologique en plaque haute pression sans granulation et à surface décorative, et son procédé de fabrication

(30) Priority: 12.03.2013 CN 201310077131
(43) Date of publication of application: 01.10.2014
(73) Proprietor: Henan Yongwei Security Co., Ltd., Jiaozuo City, Henan Province 454591 (CN)
(72) Inventor: Ren, Taiping, Jiaozuo City Henan Province 454591 (CN); Ren, Yuliang, Jiaozuo City Henan Province 454591 (CN); Fu, Mingfeng, Jiaozuo City Henan Province 454591 (CN); Xu, Minghua, Jiaozuo City Henan Province 454591 (CN); Liu, Weiju, Jiaozuo City Henan Province 454591 (CN)
(74) Representative: Algemeen Octrooi- en Merkenbureau B.V.

(56) References cited:
- EP-A2- 0 122 396
- WO-A1-03/042456
- US-A- 4 002 790
- US-A- 4 510 199

## Description

### Technical Field

The present invention belongs to the field of building decorative materials, and in particular relates to a granulation-free ecological plate high-pressure decorative surface material and a manufacturing method thereof.

### Background Art

At present, interior decoration materials in China mainly include paints, coatings, soft decorative material wallpaper, wall covering and decorative plates. Most paints and coatings contain volatile organic pollutants and thus will cause a certain degree of potential harm to the health of the user or residents. Wallpaper, wall covering and the like have shortcomings such as being not waterproof, dampproof, being liable to fall off and mildew under high humidity. The glue used for pasting them mostly is a benzene solution of rubber adhesives, and the volatile solvent is also harmful to the human bodies. Decorative plates mostly are wood or wood derivative materials and are adhered to a substrate after being coated with paints. Nowadays widely used one-side decorative high-pressure decorative laminates are produced by impregnating paper (including surface paper, decorative surface paper and base paper) with a thermosetting resin and then undergoing high temperature and high pressure, and are mainly used for furniture and interior decoration. They have a wide selection of colors and have a thickness mostly of 0.5 to 1.2 mm, and there are many forms of surface treatment, including high gloss, matte, embossed surface and so on. Because of a high resin content and the use of a high temperature and pressure process, the surface is dense, and therefore they are excellent in properties such as water resistance, dry heat resistance, corrosion resistance, and impact resistance. The used thermosetting resins include melamine formaldehyde resin and phenolic resin. Some enterprises in China also use low-cost urea-formaldehyde resins and modified urea-formaldehyde resins to partially replace melamine formaldehyde resin and phenolic resin which are high-cost. During the hot-press process, it is necessary to mold the surface using a stainless steel molding template. There are usually two ways for the isolation between two pieces of one-side decorative plates: a - a releasing agent is added to the resin for impregnating the bottom paper, with an aluminum plate as the isolation material; the product has a smooth surface, but the pavement efficiency is low; the aluminum plate takes some hot-press room, and the production efficiency is low; b - a biaxially oriented PP thin film is used as an isolation material between two pieces of slab bottom paper, but this material shrinks during the hot press, so the life thereof is short, and the cost is high; it is necessary to recycle the waste thin film, which causes some environmental pollution. After the hot-press molding, edge sawing needs to be performed to make the decorative surface material has a size meeting that of the base material, and longitudinal granulation on the back is performed so that the adhesive distribution upon the adhesion to the base material is uniform and thereby the adhesion strength is enhanced. After the back is granulated with a granulating machine, the transverse tensile strength significantly decreases due to the existence of longitudinal marks. For high-pressure decorative plates using paper as the basic material, since the fiber distribution is mainly longitudinal intertwined during the papermaking of the base paper, the longitudinal tensile strength is usually significantly higher than the transverse tensile strength. In general, the granulated high-pressure decorative plates have a transverse tensile strength being 60 to 70% of the longitudinal tensile strength. Besides, dust generated during the granulation has a small particle size, and the dust is mainly powder of formaldehyde-containing resins and pulp fibers. In China, landfill or incineration is mostly adopted, and such processing causes serious secondary pollution, increases energy consumption, and generates impact on the health of the operators.

WO 03/042456 relates to a method of releasing laminates from one another in a heat and pressure consolidated press pack comprising a plurality of thermosetting synthetic resin-impregnated fibrous core sheets in superimposed relationship, in groups of at least two stacks. The release sheet for use in the production of laminates comprises a cellulosic based paper substrate wherein at least one surface of the substrate is salt-treated during formation of the substrate via the application to the surface of an aqueous solution comprising at least one water-soluble multivalent, and wherein the substrate is coated after formation on at least one salt-treated surface with a film comprising at least one salt of alginic acid.

### Summary of the Invention

The present invention aims at overcoming shortcomings of the existing techniques of producing a one-side decorative high pressure decorative plate, and provides a granulation-free ecological plate high-pressure decorative surface material and a manufacturing method thereof. During a hot-press process of the surface material of the present invention, bottom paper releasing layers of the two groups of slabs directly contact with each other, without using an aluminum plate or a biaxially oriented PP thin film as an isolation material, so that the cost is saved, the pavement becomes convenient and fast, the production efficiency is high, and no process waste is generated, so environmental pollution is reduced. During the subsequent processing of the product, it is unnecessary to perform granulation on the back after the edge sawing, so the transverse tensile strength can be significantly improved, the thickness significantly decreases, and a decorative surface material having a thickness of 0.25 mm can be produced. Since granulation on the back is unnecessary, the generation of dust is reduced, and thus environmental pollution and energy consumption during the subsequent processing are reduced.

The present invention is realized by means of the following technical solutions.

A granulation-free ecological plate high-pressure decorative surface material, comprising: a bottom paper layer, a core paper layer, a decorative paper layer and a surface paper layer which are sequentially arranged in this order, wherein a releasing agent coating is coated on the surface of the bottom paper layer opposite to the core paper layer.

The aforesaid granulation-free ecological plate high-pressure decorative surface material, wherein the bottom paper layer is a thermosetting resin impregnated natural brown kraft paper quantified within a range of 80-165 g/m².

The aforesaid granulation-free ecological plate high-pressure decorative surface material, wherein the core paper layer is a thermosetting resin impregnated natural brown kraft paper quantified within a range of 80-165 g/m².

The aforesaid granulation-free ecological plate high-pressure decorative surface material, wherein the decorative paper layer is a thermosetting resin impregnated decorative paper which is a solid color decorative paper or printing decorative paper quantified within a range of 70-120 g/m².

The aforesaid granulation-free ecological plate high-pressure decorative surface material, wherein the surface paper layer is a thermosetting resin impregnated bamboo fiber pulp paper quantified within a range of 22-45 g/m².

A method for manufacturing the aforesaid granulation-free ecological plate high-pressure decorative surface material, comprising the steps of:
a. preparation of a special releasing agent: mixing 30-50 parts by weight of a releasing agent, 900-1000 parts by weight of a deionized water and 2-5 parts by weight of a dispersant, stirring slowly for 30 to 60 minutes and then standing for 6 to 8 hours, to obtain a special releasing agent;
b. preparation of an impregnated core paper: impregnating a kraft as the core paper layer in any one of water-soluble phenolic resin, melamine-modified urea-formaldehyde resin, urea-formaldehyde resin and phenol-modified urea-formaldehyde resin, during the impregnating process the sizing amount of the resin being 50 to 60%, performing drying after the impregnating, during the drying process the volatile component being 7.0 to 9.5%, cutting according to the desired length after the drying to obtain the impregnated core paper;
c. preparation of an impregnated bottom paper: impregnating a kraft as the bottom paper layer in any one of water-soluble phenolic resin, melamine-modified urea-formaldehyde resin and phenol-modified urea-formaldehyde resin, during the impregnating process the sizing amount of the resin being 55 to 70%, preliminarily drying after the impregnating, during the drying process the volatile component being 20.0 to 25.0%, coating said special releasing agent onto one side of the paper in an amount of 0.3 to 0.4 Kg/m², performing drying, during the drying process the volatile component being 7.5 to 10.0%, cutting according to the desired length after the drying to obtain the impregnated releasing bottom paper;
d. preparation of an impregnated decorative paper: performing a first impregnating by impregnating a solid color paper or a printing paper in any one of melamine formaldehyde resin and a melamine-modified urea-formaldehyde resin, then performing a second impregnating by impregnating the solid color paper or printing paper that has undergone the first impregnating and has been dried with melamine formaldehyde resin, and drying it, the sizing amount of the resin after twice impregnating processes being 90 to 120%, a volatile component after the drying being 7.5 to 9.5%, and a pre-curing degree being 35 to 45%, cutting according to the desired length after the drying to obtain the impregnated decorative paper;
e. preparation of an impregnated surface paper: impregnating a bamboo fiber pulp paper in melamine formaldehyde resin, and performing drying, during the impregnating process the sizing amount of the resin being 180 to 300%, a volatile component during the drying process being 8.0 to 11.0%, and a pre-curing degree being 40 to 50%, cutting according to the desired length after the drying to obtain the pre-impregnated surface paper;
f. collocating the impregnated core paper and the impregnated releasing bottom paper respectively prepared in steps b and c to pre-compose a base slab, wherein the releasing agent coating is opposite to the core paper, and cyclic pavement is performed in an order as follows between a bottom plate and a cover plate in a batch-type hot-press machine: the base slab, the impregnated decorative paper, the impregnated surface paper, a template, the impregnated surface paper, the impregnated decorative paper, the base slab, 6 to 10 pieces of the template and 12 to 20 groups of base slabs being paved in each floor;
g. putting into a hot-press machine after the pavement, boosting and heating for 15 to 20 minutes, and pressing for 30 to 45 minutes in a condition that the temperature reaches 130 to 135°C and the pressure reaches 16 to 23 Mpa, after the pressing, maintaining the pressure and cooling down;
h. releasing the pressure after the temperature drops to 40°C or lower, unloading the plate from the machine, and finally performing edge-sawing process, to obtain the granulation-free ecological plate high-pressure decorative surface material according to the present invention.

The aforesaid method for manufacturing the granulation-free ecological plate high-pressure decorative surface material, wherein the volatile component during the drying process means a percentage content by weight of the volatile component relative to the impregnated surface paper.

The aforesaid method for manufacturing the granulation-free ecological plate high-pressure decorative surface material, wherein in step g, the heating process uses a heating medium that is high pressure steam or superheated water and lasts for 15 to 17 minutes, and the cooling process uses a cooling medium that is water and lasts for 30 to 40 minutes.

The aforesaid method for manufacturing the granulation-free ecological plate high-pressure decorative surface material, wherein the releasing agent is a siloxane compound-type releasing agent.

The aforesaid method for manufacturing the granulation-free ecological plate high-pressure decorative surface material, wherein the dispersant is Tween 80.

### Advantageous effects of the present invention

1. The granulation-free ecological plate high-pressure decorative surface material according to the present invention has a significantly improved transverse tensile strength (for the details, see detection data of relevant performance indexes in the Examples). According to the technical solution of the present invention, it is possible to produce a granulation-free ecological plate high-pressure decorative surface material which is fire resistant, water resistant, moisture resistant, impact resistant, pollution resistant, beautiful and durable. During the production, bottom paper releasing layers of the two groups of slabs directly contact with each other, without using an aluminum plate or a biaxially oriented PP thin film as an isolation material, so that the cost is saved, the pavement becomes convenient and fast, the production efficiency is high, and no process waste is generated, so environmental pollution is reduced. Besides, it is unnecessary to perform granulation on the back, so no dust is generated, and subsequently it is unnecessary to perform complicated innocuous treatment, thereby decreasing the energy consumption and guaranteeing the health of the operators.
2. As compared with conventional interior decorative materials such as decorative laminates, soft decorative materials and the like, the granulation-free ecological plate high-pressure decorative surface material produced according to the technical solution of the present invention has the following advantages:
   (1) The product of the present invention is a high-strength and high-pressure decorative plate, which is water resistant, moisture resistant, wear resistant, impact resistant, and pollution resistant, which is not liable to fall off after adhesion thereof or to mildew, and of which the surface can be easily cleaned.
   (2) No aldehyde-containing adhesive is applied to the surface of the product of the present invention, so the product has a low formaldehyde emission and is harmless to the health of the residents. Besides, the product of the present invention has a high transverse tensile strength and thus will not crack while being used.
   (3) The product of the invention has various patterns and colors, the decorative layer may be pre-impregnated decorative paper or pre-coated metal aluminum foil, and there are hundreds of varieties as options.
   (4) Different templates can be used to treat the surface of the product of the present invention, and there are various surface treatment methods such as high gloss, matte, embossment and so on.
   (5) The present invention can employ a one-side decorative plate having a small thickness which is adhered to other wood base material, and it can undergo post-molding processing. The resultant product has a good nail holding ability and can be drilled, perforated and directly connected with screws.

### Brief Description of the Drawings

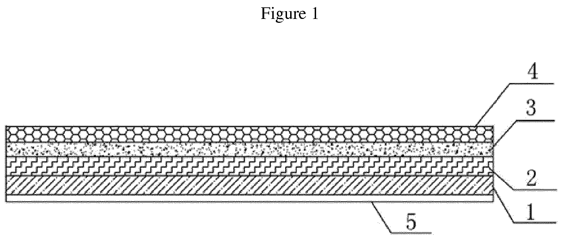

Figure 1 is a structural schematic diagram of Example 1, wherein 1 is a bottom paper layer, 2 is a core paper layer, 3 is a decorative paper layer, 4 is a surface paper layer, and 5 is a releasing agent coating.

### Description of the Embodiments

The present invention is further described in detail below in combination with specific examples and drawings, but the present invention is not limited to these examples.

In the present invention, melamine modified urea-formaldehyde resin used in the following examples is prepared in a method as below:

Urea and formaldehyde used in preparing melamine modified urea-formaldehyde resin are in a molar ratio of 1: 1.90, melamine is added in an amount of 10% of the amount of formaldehyde, polyvinyl alcohol is added in an amount of 0.2% of the total resin amount, and hexamethylene tetramine is added in an amount of 2.5% of the total resin amount.
(1) firstly, add measured formaldehyde to a reaction kettle, begin to heat up, and add hexamethylene tetramine, melamine, polyvinyl alcohol and a primary urea in an amount of 75% of the total urea amount;
(2) heat up to a temperature of from 85 to 88°C within 30 minutes, keep warm for 35 minutes, and then add acetic acid catalyst to adjust the pH to 6.5 to 6.8, and cool down to 75 to 80°C when a viscosity reaches requirement, add a secondary urea in an amount of 25% of the total urea amount, and add purified water to adjust a theoretical solid content to 48%, react for 10 minutes, and cool down to 45°C or lower, to obtain a liquid colloid;
(3) add a complex curing agent in an amount of 1.5 to 3% of the total amount of the liquid colloid, adjust to 100°C and cure for 12 to 14 minutes, and discharge (the complex curing agent is an aqueous solution in which ammonium chloride: urea: Urotropine = 25:40:35, the mass fraction of ammonium chloride is 25%).

In the present invention, melamine formaldehyde resin used for impregnating the decorative paper in the following examples is prepared in a method as below:

Melamine and formaldehyde used in preparing the melamine formaldehyde resin are in a molar ratio of 1:3.0.
(1) add measured formaldehyde to a reaction kettle, add water to adjust the concentration to 30%, and adjust the pH to 9.2 to 9.5 with liquid caustic soda, and heat up to 40°C;
(2) add measured melamine to the reaction kettle, continue to heat up to 70°C when the solution becomes clear;
(3) continue to heat up to 90 to 94°C, keep warm for about 40 minutes, and then measure water-insolubility in water at 20°C, measure water tolerance after the appearance of a cloud point, and add a complex fire retardant of ammonium dihydrogen phosphate and sodium pyrophosphate in an amount of 6% of the total resin amount when the colloid : water = 1:5, then cool down, and add a solution of water and ethanol at a mass ratio of 1:1 at 75°C, to adjust the theoretical solid content to 45%, then continue to cool down;
(4) adjust the pH to about 8.5 at 50°C, and discharge at 45°C. Quality indexes of the resulting melamine formaldehyde resin: pH is 8.3 to 8.6, specific gravity is 1.21 to 1.25 g/cm³, solid content is 43 to 48%, water tolerance is 1:3. 0.3% of a curing agent is added, and the curing agent is a solution in which phthalic anhydride: triethanolamine : water = 1:1.5:2.

In the present invention, melamine formaldehyde resin used for impregnating the surface paper and the post-molded decorative plate in the following examples is prepared in a method as below:

Melamine and formaldehyde used in preparing the melamine formaldehyde resin are in a molar ratio of 1:1.65. The mass of caprolactam is 13.5%, the mass of diethylene glycol is 18%, the mass of sucrose is 1.5%, and the mass of thiourea is 2.2%, with respect to the mass of melamine.
(1) add measured formaldehyde to a reaction kettle, add water to adjust the concentration to 30%, and adjust the pH to 9.2 to 9.5 with liquid caustic soda, and heat up to 40°C;
(2) add measured melamine, thiourea and sucrose to the reaction kettle, continue to heat up to 70°C when the solution becomes clear;
(3) continue to heat up to 90 to 94°C, keep warm for about 40 minutes, and then measure water-insolubility in water at 20°C, measure water tolerance after the appearance of a cloud point, and add caprolactam when the colloid: water = 1:6, then cool down, and add diethylene glycol at 75°C, add purified water to adjust a theoretical solid content to 48%, and continue to cool down;
(4) adjust the pH to about 8.5 at 50°C, and discharge at 45°C. Quality indexes of the resulting melamine formaldehyde resin: pH is 8.3 to 8.6, specific gravity is 1.23 to 1.25 g/cm³, solid content is 44 to 47%, water tolerance is 1:2.5 to 3.5. A curing agent is added to adjust the curing time to 12 to 14 minutes at 100°C. The curing agent is a solution in which para-toluenesulfonic acid: morpholine: water = 1:2.2:4.84.

In the present invention, a water-soluble phenolic resin used in the following examples is prepared in a method as below:

Phenol and formaldehyde used in preparing the water-soluble phenolic resin are in a molar ratio of 1:1.55, the mass of rosin is 10%, and the mass of urea is 1 %, with respect to the total resin content.
(1) add formaldehyde accounting for 85% of the total formaldehyde content to a reaction kettle, then add micro(nano)cellulose reinforcing agent in an amount of 3 to 10% of the total resin content, heat up to 40°C, add rosin, liquid phenol and flake caustic, adjust the pH to 9.5 to 9.8, continue to heat up;
(2) heat up to 90 to 94°C, keep warm for about 40 minutes, then cool down to 50°C, add the remaining formaldehyde, heat up to 90°C, keep warm;
(3) measure a cloud point in water at 20°C, after the appearance of the cloud point, measure the viscosity using a modified Ostwald viscometer, cool down when the viscosity becomes 40 to 70 mm/s, and add urea and water at 75°C to adjust a theoretical solid content to 48%, and continue to cool down;
(4) adjust the pH to 9.0 to 10.0 at 50°C, and discharge at 45°C. Quality indexes of the resulting water-soluble phenolic resin: pH is 9.2 to 9.8, specific gravity is 1.17 to 1.19 g/cm³, solid content is 45 to 48%, viscosity is 45 to 85 mm/s.

In the present invention, a post-molded phenolic resin (a water-soluble phenolic resin) used in the following examples is prepared in a method as below:

Phenol and formaldehyde used in preparing the post-molded phenolic resin are in a molar ratio of 1:1.23, the mass of caprolactam is 7% of the mass of phenol, the mass of diethylene glycol is 11.8% of the mass of phenol, and the mass of 1,4-butanediol is 2.5% of the total mass of the resin.
(1) add phenol and formaldehyde to a reaction kettle, then add a sodium hydroxide solution of a mass percent concentration of 30% to adjust the pH to 10.0, and heat up;
(2) heat up to 90 to 94°C, and keep warm;
(3) measure a cloud point in water at 35°C, cool down after the appearance of the cloud point, add caprolactam, add diethylene glycol at 75°C, keep warm for 20 minutes;
(4) add 1,4-butanediol, and add ethanol to adjust a theoretical solid content to 48%, continue to cool down, and discharge at 45°C. Quality indexes of the resulting post-molded phenolic resin: pH is 9.2 to 9.8, specific gravity is 1.17 to 1.19 g/cm³, solid content is 45 to 48%, viscosity is 13.2 to 14.5 mm/s.

In the present invention, a urea-formaldehyde resin used in the following examples is prepared in a method as below:

Urea and formaldehyde used in preparing the urea-formaldehyde resin are in a molar ratio of 1:1.62, and the amount of added polyvinyl alcohol is 2‰ of the total mass of the resin.
(1) add measured formaldehyde to a reaction kettle, add a sodium hydroxide solution of a mass percent concentration of 30% to adjust the pH of the formaldehyde solution to 9.0, heat up, then add urea and polyvinyl alcohol for the first time, the amount of the urea added for the first time accounting for 75% of the total amount of the urea to be added;
(2) heat up for 30 minutes to a temperature of from 85 to 88°C, keep warm for 35 minutes at this temperature, then add acetic acid to adjust the pH to 4.8, and add a certain amount of water when the viscosity reaches the requirement to adjust the theoretical solid content of the resin to 48%, and add the remaining urea accounting for 25% of the total amount of urea, react for 10 minutes, after the reaction cool down to 45°C or lower, to obtain a reaction liquid colloid;
(3) finally, add a complex curing agent accounting for 0.5% of the total weight of the reaction liquid colloid, discharge the resultant urea-formaldehyde resin. The complex curing agent is an aqueous solution in which ammonium chloride: urea: Urotropine = 25:40:35, the mass fraction of ammonium chloride is 25%).

In the present invention, a phenol-modified urea-formaldehyde resin used in the following examples is prepared in a method as below:

Phenol, urea and formaldehyde used in preparing the phenol-modified urea-formaldehyde resin are in a molar ratio of 1:2.4:6.0.
(1) add phenol to a reaction kettle, heat up, add formaldehyde accounting for 85% of the total amount, stir, and add a sodium hydroxide solution of a mass percent concentration of 30% to adjust the pH of the formaldehyde solution to 8.5 to 8.8, and heat up;
(2) heat up for 30 minutes to 90 to 92°C, and keep warm at this temperature for 35 minutes;
(3) cool down to 60°C, add urea, then heat up to 85 to 88°C, keep warm for 25 minutes, then add acetic acid to adjust the pH to 5.2, and add the remaining formaldehyde when the viscosity reaches the requirement, react for 10 minutes, and then add a certain amount of water to adjust the theoretical solid content of the resin to 48%, after the reaction cool down to 45°C or lower, to obtain a reaction liquid colloid.

### Example 1

In this example, the granulation-free ecological plate high-pressure decorative surface material comprises a bottom paper layer 1, a core paper layer 2, a decorative paper layer 3 and a surface paper layer 4 which are sequentially arranged from the bottom up, wherein a releasing agent coating 5 is coated on the surface of the bottom paper layer 1 opposite to the core paper layer 2.

The granulation-free ecological plate high-pressure decorative surface material of this example is manufactured in a method comprising the following specific steps:
a. preparation of a special releasing agent:
   40 kg of a siloxane compound releasing agent and 960 kg of a deionized water are mixed and added to a stirred tank, 2 kg of a dispersant is added, then the mixture is stirred slowly for 45 minutes and then is stood for 7 hours in a stainless steel storage tank, to obtain a special releasing agent;
b. preparation of an impregnated core paper:
   a kraft quantified as 120 g/m² and having a width of 1250 mm is impregnated in a melamine-modified urea-formaldehyde resin; the sizing amount of the resin after impregnating is 54%; drying is performed after the impregnating, the volatile component is 7.8%, cutting is performed to obtain the impregnated core paper of 1250 × 2500mm;
c. preparation of an impregnated bottom paper:
   a kraft quantified as 100 g/m² and having a width of 1250 mm is impregnated in a water-soluble phenolic resin, the sizing amount of the resin after impregnating is 64%, preliminarily drying is performed after the impregnating, after the drying, the volatile component is 23.0%; said special releasing agent is coated onto one side of the paper in an amount of 0.32 Kg/m², then drying is performed, after the drying, the volatile component is 8.6%, cutting is performed as required after the drying to obtain the impregnated releasing bottom paper of 1250 × 2500mm;
d. preparation of an impregnated decorative paper:
   a red solid color paper quantified as 100 g/m² and having a width of 1250 mm is impregnated for the first time in a melamine-modified urea-formaldehyde resin and dried, and is impregnated for the second time in a melamine formaldehyde resin and dried, the sizing amount of the resin after twice impregnating processes is 115%; after the drying, a volatile component is 9.0%, a pre-curing degree is 42%; after the drying, cutting is performed according to the required length to obtain the pre-impregnated decorative paper of 1250 × 2500mm;
e. preparation of an impregnated surface paper:
   a surface paper quantified as 28 g/m² and having a width of 1250 mm is impregnated in a melamine formaldehyde resin and dried, the sizing amount of the resin after impregnating is 230%; after the drying, a volatile component is 9.8%, and a pre-curing degree is 42%; after the drying, cutting is performed according to the required length to obtain the pre-impregnated surface paper of 1250 × 2500mm;
f. collocating three pieces of impregnated core paper and the impregnated releasing bottom paper respective prepared in steps b and c to pre-compose a base slab (the releasing agent coating is opposite to the core paper), wherein in each floor of a 15-floor batch-type hot-press machine, the pavement is performed in an order as follows from the bottom up: a bottom plate, a cushion, an aluminum plate, the base slab (the releasing agent coating on the bottom paper faces towards the aluminum plate), an impregnated red decorative paper, an impregnated surface paper, a matte template, the impregnated surface paper, the impregnated red decorative paper, the base slab (the releasing agent coating is opposite to the decorative paper), the base slab (the releasing agent coating is opposite to the decorative paper), the impregnated red decorative paper, the impregnated surface paper, the matte template, the impregnated surface paper, the impregnated red decorative paper, the base slab (the releasing agent coating is opposite to the decorative paper), ... the base slab (the releasing agent coating is opposite to the decorative paper), the impregnated red decorative paper, the impregnated surface paper, the matte template, the impregnated surface paper, the impregnated red decorative paper, the base slab (the releasing agent coating is opposite to the decorative paper), the aluminum plate, the cushion, a cover plate, 9 pieces of templates and 18 groups of base slabs are paved in each floor;
g. the paved plates are put into a hot-press machine, boosted and heated, and are pressed for 36 minutes in a condition that the temperature reaches 133°C and the pressure reaches 19.2 Mpa, after the pressing, the pressure is maintained and the temperature is reduced;
h. the pressure is released after the temperature drops to 40°C or lower, the plate is unloaded from the machine, and finally four-side edge-sawing process is performed according to a size of 1220 × 2440 mm, to obtain a red granulation-free ecological plate high-pressure decorative surface material.

Detection data of the product of Example 1: 15-floor hot-press machine, 270 pieces of red granulation-free ecological plate high-pressure decorative surface material plate having a thickness of 0.7 mm are obtained in each process. The product is measured to have a boiling water-resistant (2 hours) weight gain of 11.2%, thickness gain of 7.9%, no change in resistance to dry heat, a longitudinal tensile strength of 69.0 MPa, a transverse tensile strength of 57.4 MPa, and a formaldehyde emission of 1.1 mg/L (desiccator method).

### Example 2

In this example, the granulation-free ecological plate high-pressure decorative surface material comprises a bottom paper layer 1, a core paper layer 2, a decorative paper layer 3 and a surface paper layer 4 which are sequentially arranged from the bottom up, wherein a releasing agent coating 5 is coated on the surface of the bottom paper layer 1 opposite to the core paper layer 2.

The granulation-free ecological plate high-pressure decorative surface material of this example is manufactured in a method comprising the following specific steps:
a. preparation of a special releasing agent:
   50 kg of a siloxane compound releasing agent and 1000 kg of a deionized water are mixed and added to a stirred tank, 4 kg of a dispersant, i.e., Tween 80, is added, then the mixture is stirred slowly for 60 minutes and then is stood for 8 hours in a stainless steel storage tank, to obtain a special releasing agent;
b. preparation of an impregnated core paper:
   a kraft quantified as 140 g/m² and having a width of 1330 mm is impregnated in a melamine-modified urea-formaldehyde resin; the sizing amount of the resin after impregnating is 58%; drying is performed after the impregnating, the volatile component is 8.2%, cutting is performed to obtain the impregnated core paper of 1330 × 2500 mm;
c. preparation of an impregnated bottom paper:
   a kraft quantified as 100 g/m² and having a width of 1330 mm is impregnated in a post-molded phenolic resin, the sizing amount of the resin after impregnating is 69%, preliminarily drying is performed after the impregnating, after the drying process, the volatile component is 22.0%; said special releasing agent is coated onto one side of the paper in an amount of 0.36 Kg/m², then drying is performed, after the drying process the volatile component is 8.3%, cutting is performed as required after the drying to obtain the impregnated releasing bottom paper of 1330 × 2500 mm;
d. preparation of an impregnated decorative paper:
   a light gray solid color paper quantified as 80 g/m² and having a width of 1330 mm is impregnated for the first time in a urea-formaldehyde resin and dried, and is impregnated for the second time in a melamine formaldehyde resin and dried, the sizing amount of the resin after twice impregnating processes is 98%; a volatile component after drying is 8.8%, a pre-curing degree is 39%; after the drying, cutting is performed according to the required length to obtain the pre-impregnated decorative paper of 1330 × 2500 mm;
e. preparation of an impregnated surface paper:
   a surface paper quantified as 40 g/m² and having a width of 1250 mm is impregnated in melamine formaldehyde resin and dried, the sizing amount of the resin after impregnating is 280%; a volatile component after drying is 10.0%, and a pre-curing degree is 40%; after the drying, cutting is performed according to the required length to obtain the pre-impregnated surface paper of 1250 × 2500 mm;
f. collocating one piece of impregnated core paper and the impregnated releasing bottom paper respective prepared in steps b and c to pre-compose a base slab (the releasing agent coating is opposite to the core paper), wherein in each floor of a 20-floor batch-type hot-press machine, the pavement is performed in an order as follows from the bottom up: a bottom plate, a 15-layer pure wood pulp cushion paper, an aluminum plate, the base slab (the releasing agent coating on the bottom paper faces towards the aluminum plate), an impregnated light gray decorative paper, an impregnated surface paper, an lightly embossed template, the impregnated surface paper, the impregnated light gray decorative paper, the base slab (the releasing agent coating is opposite to the decorative paper), the base slab (the releasing agent coating is opposite to the decorative paper), the impregnated light gray decorative paper, the impregnated surface paper, the lightly embossed template, the impregnated surface paper, the impregnated light gray decorative paper, the base slab (the releasing agent coating is opposite to the decorative paper), ... the base slab (the releasing agent coating is opposite to the decorative paper), the impregnated light gray decorative paper, the impregnated surface paper, the lightly embossed template, the impregnated surface paper, the impregnated light gray decorative paper, the base slab (the releasing agent coating is opposite to the decorative paper), the aluminum plate, the 15-layer pure wood pulp cushion paper, a cover plate, 10 pieces of templates and 20 groups of base slabs are paved in each floor;
g. the paved plates are put into a hot-press machine, boosted and heated, and are pressed for 34 minutes in a condition that the temperature reaches 135°C and the pressure reaches 20.2 Mpa, after the pressing, the pressure is maintained and the temperature is reduced;
h. the pressure is released after the temperature drops to 40°C or lower, the plate is unloaded from the machine, and finally four-side edge-sawing process is performed according to a size of 1310 × 2440mm, to obtain a light gray granulation-free ecological plate high-pressure decorative surface material.

Detection data of the product of Example 2: 20-floor hot-press machine, 400 pieces of light gray granulation-free ecological plate high-pressure decorative surface material plate having a thickness of 0.37 mm are obtained in each process. The product is measured to have a boiling water-resistant (2 hours) weight gain of 14.7%, thickness gain of 11.6%, no change in resistance to dry heat, a longitudinal tensile strength of 59.3 MPa, a transverse tensile strength of 53.8 MPa, a formaldehyde emission of 0.92 mg/L, a bending temperature of 112°C, a blistering temperature of 172°C, a bending radius of 2mm or less.

### Example 3

In this example, the granulation-free ecological plate high-pressure decorative surface material comprises a bottom paper layer 1, a core paper layer 2, a decorative paper layer 3 and a surface paper layer 4 which are sequentially arranged from the bottom up, wherein a releasing agent coating 5 is coated on the surface of the bottom paper layer 1 opposite to the core paper layer 2.

The granulation-free ecological plate high-pressure decorative surface material of this example is manufactured in a method comprising the following specific steps:
a. preparation of a special releasing agent:
   30 kg of a siloxane compound releasing agent and 900 kg of a deionized water are mixed and added to a stirred tank, 2 kg of a dispersant, i.e., Tween 80, is added, then the mixture is stirred slowly for 30 minutes and then is stood for 6 hours in a stainless steel storage tank, to obtain a special releasing agent;
b. preparation of an impregnated core paper:
   a kraft quantified as 120 g/m² and having a width of 1250 mm is impregnated in a post-molded phenolic resin; the sizing amount of the resin after impregnating is 53%; drying is performed after the impregnating, the volatile component is 7.9%, cutting is performed to obtain the impregnated core paper of 1250 × 2500 mm;
c. preparation of an impregnated bottom paper:
   a kraft quantified as 120 g/m² and having a width of 1250 mm is impregnated in a water-soluble phenolic resin, the sizing amount of the resin after impregnating is 63%, preliminarily drying is performed after the impregnating, after the drying process the volatile component is 21.0%; said special releasing agent is coated onto one side of the paper in an amount of 0.33 Kg/m², then drying is performed, after the drying process the volatile component is 8.7%, cutting is performed as required after the drying to obtain the impregnated releasing bottom paper of 1250 × 2500 mm;
d. preparation of an impregnated decorative paper:
   a red solid color paper quantified as 90 g/m² and having a width of 1250 mm is impregnated for the first time in a melamine-modified urea-formaldehyde resin and dried, and is impregnated for the second time in a melamine formaldehyde resin and dried, the sizing amount of the resin after twice impregnating processes is 100%; after the drying process, a volatile component is 8.0%, a pre-curing degree is 38%; after the drying, cutting is performed according to the required length to obtain the pre-impregnated decorative paper of 1250 × 2500 mm;
e. preparation of an impregnated surface paper:
   a surface paper quantified as 30 g/m² and having a width of 1250 mm is impregnated in a melamine formaldehyde resin and dried, the sizing amount of the resin after impregnating is 200%; after the drying, a volatile component is 10.5%, and a pre-curing degree is 45%; after the drying, cutting is performed according to the required length to obtain the pre-impregnated surface paper of 1250 × 2500 mm;
f. collocating five pieces of the impregnated core paper and the impregnated releasing bottom paper respective prepared in steps b and c to pre-compose a base slab (the releasing agent coating is opposite to the core paper), wherein in each floor of a 15-floor batch-type hot-press machine, the pavement is performed in an order as follows from the bottom up: a bottom plate, a 15-layer pure wood pulp cushion paper, an aluminum plate, the base slab (the releasing agent coating on the bottom paper faces towards the aluminum plate), an impregnated decorative paper, an impregnated surface paper, a matte template, the impregnated surface paper, the impregnated red decorative paper, the base slab (the releasing agent coating is opposite to the decorative paper), the base slab (the releasing agent coating is opposite to the decorative paper), the impregnated decorative paper, the impregnated surface paper, the matte template, the impregnated surface paper, the impregnated decorative paper, the base slab (the releasing agent coating is opposite to the decorative paper), ... the base slab (the releasing agent coating is opposite to the decorative paper), the impregnated decorative paper, the impregnated surface paper, the matte template, the impregnated surface paper, the impregnated decorative paper, the base slab (the releasing agent coating is opposite to the decorative paper), the aluminum plate, the 15-layer pure wood pulp cushion paper, a cover plate, 7 pieces of templates and 14 groups of base slabs are paved in each floor;
g. the paved plates are put into a hot-press machine, boosted and heated, and are pressed for 42 minutes in a condition that the temperature reaches 135°C and the pressure reaches 17 Mpa, after the pressing, the pressure is maintained and the temperature is reduced;
h. the pressure is released after the temperature drops to 40°C or lower, the plate is unloaded from the machine, and finally four-side edge-sawing process is performed according to a size of 1220 × 2440 mm, to obtain a granulation-free ecological plate high-pressure decorative surface material.

Detection data of the product of Example 3: 15-floor hot-press machine, 210 pieces of granulation-free ecological plate high-pressure decorative surface material plate having a thickness of 0.89 mm are obtained in each process. The product is measured to have a boiling water-resistant (2 hours) weight gain of 6.7%, thickness gain of 5.6%, no change in resistance to dry heat, a longitudinal tensile strength of 96.3 MPa, a transverse tensile strength of 87.9 MPa.

## Claims

1. A granulation-free plate high-pressure decorative surface material, comprising: a bottom paper layer, a core paper layer, a decorative paper layer and a surface paper layer which are sequentially arranged in this order, wherein a releasing agent coating is coated on the surface of the bottom paper layer opposite to the core paper layer, **characterized in that** said surface paper layer is a thermosetting resin impregnated bamboo fiber pulp paper quantified within a range of 22-45 g/m².

2. The granulation-free plate high-pressure decorative surface material according to claim 1, wherein the bottom paper layer is a thermosetting resin impregnated natural brown kraft paper quantified within a range of 80-165 g/m².

3. The granulation-free plate high-pressure decorative surface material according to claim 1, wherein the core paper layer is a thermosetting resin impregnated natural brown kraft paper quantified within a range of 80-165 g/m².

4. The granulation-free plate high-pressure decorative surface material according to claim 1, wherein the decorative paper layer is a thermosetting resin impregnated decorative paper which is a solid color decorative paper or printing decorative paper quantified within a range of 70-120 g/m².

5. A method for manufacturing the granulation-free plate high-pressure decorative surface material according to any one of claims 1 to 4, comprising the steps of:
a. preparation of a special releasing agent: mixing 30-50 parts by weight of a releasing agent, 900-1000 parts by weight of a deionized water and 2-5 parts by weight of a dispersant, stirring slowly for 30 to 60 minutes and then standing for 6 to 8 hours, to obtain a special releasing agent;
b. preparation of an impregnated core paper: impregnating a kraft as the core paper layer in any one of water-soluble phenolic resin, melamine-modified urea-formaldehyde resin, urea-formaldehyde resin and phenol-modified urea-formaldehyde resin, during the impregnating process the sizing amount of the resin being 50 to 60%, performing drying after the impregnating, during the drying process the volatile component being 7.0 to 9.5%, cutting according to the desired length after the drying to obtain the impregnated core paper;
c. preparation of an impregnated bottom paper: impregnating a kraft as the bottom paper layer in any one of water-soluble phenolic resin, melamine-modified urea-formaldehyde resin and phenol-modified urea-formaldehyde resin, during the impregnating process the sizing amount of the resin being 55 to 70%, preliminarily drying after the impregnating, during the drying process the volatile component being 20.0 to 25.0%, coating said special releasing agent onto one side of the paper in an amount of 0.3 to 0.4 kg/m², performing drying, during the drying process the volatile component being 7.5 to 10.0%, cutting according to the desired length after the drying to obtain the impregnated releasing bottom paper;
d. preparation of an impregnated decorative paper: performing a first impregnating by impregnating a solid color paper or a printing paper in any one of melamine formaldehyde resin and a melamine-modified urea-formaldehyde resin, then performing a second impregnating by impregnating the solid color paper or printing paper that has undergone the first impregnating and has been dried with melamine formaldehyde resin, and drying it, the sizing amount of the resin after twice impregnating processes being 90 to 120%, a volatile component after the drying being 7.5 to 9.5%, and a pre-curing degree being 35 to 45%, cutting according to the desired length after the drying to obtain the impregnated decorative paper;
e. preparation of an impregnated surface paper: impregnating a bamboo fiber pulp paper in melamine formaldehyde resin, and performing drying, during the impregnating process the sizing amount of the resin being 180 to 300%, a volatile component during the drying process being 8.0 to 11.0%, and a pre-curing degree being 40 to 50%, cutting according to the desired length after the drying to obtain the pre-impregnated surface paper;
f. collocating the impregnated core paper and the impregnated releasing bottom paper respectively prepared in steps b and c to pre-compose a base slab, wherein the releasing agent coating is opposite to the core paper, and cyclic pavement is performed in an order as follows between a bottom plate and a cover plate in a batch-type hot-press machine: the base slab, the impregnated decorative paper, the impregnated surface paper, a template, the impregnated surface paper, the impregnated decorative paper, the base slab, 6 to 10 pieces of the template and 12 to 20 groups of base slab being paved in each floor;
g. putting into a hot-press machine after the pavement, boosting and heating for 15 to 20 minutes, and pressing for 30 to 45 minutes in a condition that the temperature reaches 130 to 135°C and the pressure reaches 16 to 23 Mpa, after the pressing, maintaining the pressure and cooling down;
h. releasing the pressure after the temperature drops to 40°C or lower, unloading the plate from the machine, and finally performing edge-sawing process, to obtain the granulation-free plate high-pressure decorative surface material according to the present invention.

6. The method for manufacturing the granulation-free plate high-pressure decorative surface material according to claim 5, wherein in step g, the heating process uses a heating medium that is high pressure steam or superheated water and lasts for 15 to 17 minutes, and the cooling process uses a cooling medium that is water and lasts for 30 to 40 minutes.

7. The method for manufacturing the granulation-free plate high-pressure decorative surface material according to claim 5, wherein the releasing agent is a siloxane compound-type releasing agent.

8. The method for manufacturing the granulation-free I plate high-pressure decorative surface material according to claim 5, wherein the dispersant is Tween 80.

## Patentansprüche

1. Körnungsfreies Hochdruckplattenmaterial mit dekorativer Oberfläche, mit: einer unteren Papierschicht, einer Kernpapierschicht, einer dekorativen Papierschicht und einer Oberflächenpapierschicht, die aufeinanderfolgend in dieser Reihenfolge angeordnet sind, wobei die Oberfläche der unteren Papierschicht auf der zur Kernpapierschicht entgegengesetzten Seite mit einer Trennmittelbeschichtung beschichtet ist, **dadurch gekennzeichnet, dass** die Oberflächenpapierschicht ein wärmehärtendes harzgetränktes Bambusfaserzellstoffpapier ist, bemessen im Bereich von 22 - 45 g/m².

2. Körnungsfreies Hochdruckplattenmaterial mit dekorativer Oberfläche nach Anspruch 1, wobei die untere Papierschicht ein wärmehärtendes harzgetränktes naturbraunes Packpapier ist, bemessen im Bereich von 80 - 165 g/m².

3. Körnungsfreies Hochdruckplattenmaterial mit dekorativer Oberfläche nach Anspruch 1, wobei die Kernpapierschicht ein wärmehärtendes harzgetränktes naturbraunes Packpapier ist, bemessen im Bereich von 80 - 165 g/m².

4. Körnungsfreies Hochdruckplattenmaterial mit dekorativer Oberfläche nach Anspruch 1, wobei die dekorative Papierschicht ein wärmehärtendes harzgetränktes dekoratives Papier ist, das ein durchgefärbtes dekoratives Papier oder ein bedrucktes dekoratives Papier ist, bemessen im Bereich von 70 - 120 g/m².

5. Verfahren zur Herstellung des körnungsfreien Hochdruckplattenmaterials mit dekorativer Oberfläche nach einem der Ansprüche 1 bis 4, mit den Schritten:
a. Herstellen eines speziellen Trennmittels: Mischen von 30 - 50 Gewichtsanteilen eines Trennmittels, 900 - 1000 Gewichtsanteilen eines entionisierten Wassers und 2 - 5 Gewichtsanteilen eines Dispergiermittels, langsames Rühren während 30 bis 60 Minuten und anschließendes Stehen lassen während 6 bis 8 Stunden, um ein spezielles Trennmittel zu erhalten;
b. Herstellen eines getränkten Kernpapiers: Tränken eines Packpapiers als Kernpapierschicht mit einem von wasserlöslichem Phenolharz, melaminmodifiziertem Harnstoff-Formaldehydharz, Harnstoff-Formaldehydharz und phenolmodifiziertem Harnstoff-Formaldehydharz, wobei die aufgenommene Menge an Harz während des Tränkprozesses 50 bis 60% beträgt, Durchführen einer Trocknung nach dem Tränken, wobei die flüchtige Komponente während des Trocknungsprozesses 7,0 bis 9,5% beträgt, Zuschneiden entsprechend der gewünschten Länge nach dem Trocknen, um das getränkte Kernpapier zu erhalten;
c. Herstellen eines getränkten unteren Papiers: Tränken eines Packpapiers als untere Papierschicht mit einem von wasserlöslichem Phenolharz, melaminmodifiziertem Harnstoff-Formaldehydharz oder phenol modifiziertem Harnstoff-Formaldehydharz, wobei die aufgenommene Menge an Harz während des Tränkprozesses 55 bis 70% beträgt, vorläufiges Trocknen nach dem Tränken, wobei die flüchtige Komponente während des Trocknungsprozesses 20,0 bis 25,0% beträgt, Beschichten einer Seite des Papiers mit dem speziellen Trennmittel in einer Menge von 0,3 bis 0,4 kg/m², Durchführen einer Trocknung, wobei die flüchtige Komponente während des Trocknungsprozesses 7,5 bis 10,0% beträgt, Zuschneiden entsprechend der gewünschten Länge nach dem Trocknen, um das getränkte untere Trennpapier zu erhalten;
d. Herstellen eines getränkten dekorativen Papiers: Durchführen einer ersten Tränkung, wobei ein durchgefärbtes Papier oder ein bedrucktes Papier mit Melamin-Formaldehydharz und/oder einem melaminmodifiziertem Harnstoff-Formaldehydharz getränkt wird, anschließendes Durchführen einer zweiten Tränkung, wobei das durchgefärbte Papier oder das bedruckte Papier, das der ersten Tränkung unterzogen und getrocknet wurde, mit Melamin-Formaldehydharz getränkt und getrocknet wird, wobei die aufgenommene Menge an Harz nach zwei Tränkprozessen 90 bis 120% beträgt, wobei eine flüchtige Komponente nach dem Trocknen 7,5 bis 9,5% beträgt, und wobei ein vorgehärteter Anteil 35 bis 45% beträgt, und Zuschneiden entsprechend der gewünschten Länge nach dem Trocknen, um das getränkte dekorative Papier zu erhalten;
e. Herstellen eines getränkten Oberflächenpapiers: Tränken eines Bambusfaserzellstoffpapiers mit Melamin-Formaldehydharz und Durchführen einer Trocknung, wobei die aufgenommene Menge an Harz während des Tränkprozesses 180 bis 300% beträgt, eine flüchtige Komponente während des Trocknens 8,0 bis 11,0% beträgt und ein vorgehärteter Anteil 40 bis 50% beträgt, und Zuschneiden entsprechend der gewünschten Länge nach dem Trocknen, um das vorgetränkte Oberflächenpapier zu erhalten;
f. Zusammenstellen des getränkten Kernpapiers und des getränkten unteren Trennpapiers, die in den entsprechenden Schritten b und c hergestellt wurden, um eine Sohlplatte vorzubereiten, wobei die Trennmittelbeschichtung entgegengesetzt zum Kernpapier angeordnet ist, und zyklisches Übereinanderlegen in folgender Reihenfolge zwischen einer Bodenplatte und einer Deckplatte einer Chargenheißpresse: die Sohlplatte, das getränkte dekorative Papier, das getränkte Oberflächenpapier, eine Schablone, das getränkte Oberflächenpapier, das getränkte dekorative Papier, die Sohlplatte, wobei 6 bis 10 Teile der Schablone und 12 bis 20 Gruppen der Sohlplatte in jeder Ebene angeordnet werden;
g. Einlegen in eine Heißpresse nach dem Übereinanderlegen, Hochfahren und Aufheizen während 15 bis 20 Minuten, und Pressen während 30 bis 45 Minuten in einem Zustand, in dem die Temperatur 130 bis 150 °C und der Druck 16 bis 23 MPa erreicht, wobei nach dem Pressen der Druck beibehalten und abgekühlt wird;
h. Aufheben des Drucks nachdem die Temperatur auf 40 °C oder weniger gefallen ist, Entladen der Platte aus der Presse, und schließlich Durchführen eines Kantensägeprozesses, um das erfindungsgemäße körnungsfreie Hochdruckplattenmaterial mit dekorativer Oberfläche zu erhalten.

6. Verfahren zur Herstellung des körnungsfreien Hochdruckplattenmaterials mit dekorativer Oberfläche nach Anspruch 5, wobei in Schritt g der Aufheizprozess ein Heizmedium verwendet, das Hochdruckdampf oder überhitztes Wasser ist, und 15 bis 17 Minuten lang dauert, und der Abkühlprozess ein Kühlmedium verwendet, das Wasser ist, und 30 bis 40 Minuten lang dauert.

7. Verfahren zur Herstellung des körnungsfreien Hochdruckplattenmaterials mit dekorativer Oberfläche nach Anspruch 5, wobei das Trennmittel ein Trennmittel auf Basis einer Siloxanverbindung ist.

8. Verfahren zur Herstellung des körnungsfreien Hochdruckplattenmaterials mit dekorativer Oberfläche nach Anspruch 5, wobei das Dispergiermittel Tween 80 ist.

## Revendications

1. Matériau de surface décoratif haute pression en plaque sans granulation, comprenant : une couche inférieure de papier, une couche centrale de papier, une couche décorative de papier décoratif et une couche de surface de papier qui sont disposées consécutivement dans cet ordre, dans lequel un revêtement d'agent anti-adhérent est appliqué sur la surface de la couche inférieure de papier à l'opposé de la couche centrale de papier, **caractérisé en ce que** ladite couche de surface de papier est un papier en pâte de fibres de bambou imprégné d'une résine thermodurcissable quantifié dans une plage allant de 22 à 45 g/m².

2. Matériau de surface décoratif haute pression en plaque sans granulation selon la revendication 1, dans lequel la couche inférieure de papier est un papier kraft naturel brun imprégné d'une résine thermodurcissable quantifié dans une plage allant de 80 à 165 g/m².

3. Matériau de surface décoratif haute pression en plaque sans granulation selon la revendication 1, dans lequel la couche centrale de papier est un papier kraft naturel brun imprégné d'une résine thermodurcissable quantifié dans une plage allant de 80 à 165 g/m².

4. Matériau de surface décoratif haute pression en plaque sans granulation selon la revendication 1, dans lequel la couche décorative de papier est un papier décoratif imprégné d'une résine thermodurcissable qui est un papier décoratif de couleur unie ou un papier décoratif d'impression quantifié dans une plage allant de 70 à 120 g/m².

5. Procédé de fabrication du matériau de surface décoratif haute pression en plaque sans granulation selon l'une quelconque des revendications 1 à 4, comprenant les étapes :
a. préparation d'un agent anti-adhérent spécial en mélangeant 30 à 50 parts en poids d'un agent anti-adhérent, 900 à 1000 parts en poids d'une eau déionisée et 2 à 5 parts en poids d'un agent dispersant, en agitant lentement pendant 30 à 60 minutes puis en laissant reposer pendant 6 à 8 heures, pour obtenir un agent anti-adhérent spécial ;
b. préparation d'un papier central imprégné en : imprégnant un papier kraft comme étant la couche centrale de papier dans l'un(e) quelconque parmi une résine phénolique hydrosoluble, une résine urée-formaldéhyde modifiée à la mélamine, une résine urée-formaldéhyde et une résine urée-formaldéhyde modifiée au phénol, pendant le procédé d'imprégnation la quantité de résine étant comprise entre 50 et 60%, en séchant après l'imprégnation, pendant le procédé de séchage le composant volatil étant de 7,0 à 9,5%, en coupant selon la longueur souhaitée après le séchage pour obtenir le papier central imprégné ;
c. préparation d'un papier imprégné inférieur en : imprégner un papier de kraft comme étant la couche inférieure de papier dans l'une quelconque parmi une résine phénolique hydrosoluble, une résine urée-formaldéhyde modifiée à la mélamine et une résine urée-formaldéhyde modifiée au phénol, pendant le procédé d'imprégnation la quantité d'encollage de la résine étant de 55 à 70%, en séchant au préalable après l'imprégnation, pendant le procédé de séchage le composant volatil étant de 20,0 à 25,0%, à appliquer un revêtement dudit agent anti-adhérent spécial sur un côté du papier en une quantité allant de 0,3 à 0,4 kg/m², en séchant, pendant le procédé de séchage le composant volatil étant de 7,5 à 10,0%, en coupant per selon la longueur souhaitée après le séchage pour obtenir le papier inférieur anti-adhérent imprégné ;
d. préparation d'un papier décoratif imprégné en : effectuant une première imprégnation en imprégnant un papier de couleur unie ou un papier d'impression dans l'une quelconque parmi une résine mélamine- formaldéhyde et une résine urée-formaldéhyde modifiée à la mélamine, puis en effectuant une deuxième imprégnation en imprégnant le papier de couleur unie ou le papier d'impression qui a subi la première imprégnation et a été séché avec une résine mélamine-formaldéhyde, et en le séchant, la quantité d'encollage de la résine après un double procédé d'imprégnation étant de 90 à 120%, un composant volatil après le séchage étant de 7,5 à 9,5%, et un degré de précuisson étant de 35 à 45%, en coupant selon la longueur souhaitée après le séchage pour obtenir le papier décoratif imprégné ;
e. préparation d'un papier de surface imprégné en : imprégnant un papier en pâte de fibres de bambou dans une résine mélamine-formaldéhyde, et à effectuer un séchage, pendant le procédé d'imprégnation, la quantité d'encollage de la résine étant de 180 à 300%, un composant volatil pendant le procédé de séchage étant de 8,0 à 11,0%, et un degré de précuisson étant de 40 à 50%, en coupant selon la longueur souhaitée après le séchage pour obtenir le papier de surface pré-imprégné ;
f. rassemblement du papier central imprégné et du papier inférieur anti-adhérent imprégné préparés respectivement dans les étapes b et c pour pré-composer une dalle de base, où le revêtement d'agent anti-adhérent est opposé au papier central, et un pavement cyclique est effectué dans l'ordre suivant entre une plaque inférieure et une plaque de recouvrement dans une machine de pressage à chaud discontinue : la dalle de base, le papier décoratif imprégné, le papier de surface imprégné, un gabarit, le papier de surface imprégné, le papier décoratif imprégné, la dalle de base, 6 à 10 pièces du gabarit et 12 à 20 groupes de dalle de base étant pavés dans chaque plancher ;
g. introduction dans une machine de pressage à chaud après le pavement, de poussée et de chauffage pendant 15 à 20 minutes, et de pressage pendant 30 à 45 minutes dans une condition permettant d'atteindre une température allant de 130 à 135°C et une pression allant de 16 à 23 MPa, de maintien de la pression et de refroidissement après le pressage ;
h. relâchement de la pression après que la température diminue à 40°C ou moins, de déchargement de la plaque de la machine, et enfin exécution d'un procédé de sciage de bord, pour obtenir le matériau de surface décoratif haute pression en plaque sans granulation selon la présente invention.

6. Procédé de fabrication du matériau de surface décoratif haute pression en plaque sans granulation selon la revendication 5, dans lequel à l'étape g, le procédé de chauffage utilise un agent chauffant qui est la vapeur haute pression ou l'eau surchauffée et dure 15 à 17 minutes, et le procédé de refroidissement utilise un agent de refroidissement qui est l'eau et dure 30 à 40 minutes.

7. Procédé de fabrication du matériau de surface décoratif haute pression en plaque sans granulation selon la revendication 5, dans lequel l'agent anti-adhérent est un agent anti-adhérent de type composé de siloxane.

8. Procédé de fabrication du matériau de surface décoratif haute pression en plaque sans granulation selon la revendication 5, dans lequel le dispersant est le Tween 80.
